# EUROPEAN PATENT SPECIFICATION

(11) **EP 4 487 000 B1**
(45) Date of publication and mention of the grant of the patent: **19.11.2025**
(21) Application number: 23709126.9
(22) Date of filing: 23.02.2023
(51) Int. Cl.: F04B 17/03, F24D 10/00, F04B 53/08, F04B 49/06, F24D 19/10

(54) **CONTROL DEVICE**
STEUERVORRICHTUNG
DISPOSITIF DE COMMANDE

(30) Priority: 01.03.2022 DK PA202270072
(43) Date of publication of application: 08.01.2025
(73) Proprietor: Grundfos Holding A/S, 8850 Bjerringbro (DK)
(72) Inventor: PLOUGMANN, Jan, 8850 Bjerringbro (DK)
(74) Representative: Patentanwälte Hemmer Lindfeld Frese Partnerschaft mbB
(86) International application number: PCT/EP2023/054616
(87) International publication number: WO 2023/165899

(56) References cited:
- JP-A- H04 191 481
- US-A- 4 034 912
- US-A- 4 436 486
- US-A- 5 466 995
- US-A1- 2016 245 544

## Description

The invention refers to a control device configured for control of a pump unit or a hydronic system, and to such a pump unit and to a respective hydronic system.

Pump units like circulator pumps used in hydronic systems, for example heating or cooling systems, are known to have an electronic control with a port for data communication. In complex hydronic systems it is desired that the control device of the pump unit can provide an additional control functionality for the entire hydronic system or further components arranged in the hydronic system. Furthermore, external control systems are known to control for example pumps and valves in a hydronic system. For example, US 4,034,912 discloses a method and a control arrangement for a heating system comprising a controller for controlling a circulator pump, a burner and a valve for switching between a solar heat source and a boiler as a heat source. This valve is activated via a relay switching the valve and activating and deactivating a burner of the boiler.

It is the object of the invention to upgrade the functionality or an interface of a control device of a pump unit or a hydronic system to allow the communication with and the control of different external components connected to the control device.

This object is achieved by a control device having the features defined in claim 1, by a pump unit having the features defined in claim 16 and a hydronic system defined in claim 17. Preferred embodiments are defined in the dependent subclaims, the following description and the accompanying drawings.

The control device according to the invention is configured and provided for control of a pump unit or hydronic system. Preferably the control device is integrated into the pump unit. The control device comprises an electric interface which is configured for connecting at least one sensor and at least one electric load with the control device. The electric interface is a three-pin connector wherein the communication and voltage supply to the three pins is controlled by the control device. The control device includes a switching device which is configured to selectively apply electric signals onto the three pins of the connectors and/or to selectively receive electric signals from the three pins of the connector. This allows to selectively receive different sensor signals from the at least one connected sensor or to supply a voltage to the at least one electric load, i. e. to activate and control the electric load connected to the connector. Thus, the switching device allows to change the functionality of the three pins of the connector, i. e. to alter the voltage supply onto the pins of the connector as described in more detail in the following. This allows to connect different sensors and/or electric loads with the pins of the three-pin connector and to alter the reading of the different sensors and/or the control of the connected electric load by use of the switching device. The switching device allows to switch between different configurations of the three-pin arrangement, i. e. to apply different voltages between those pins providing different functionality for the connected sensors and/or loads. Thus, the communication capabilities and control capabilities via a three-pin connector, can be extended.

According to a first possible embodiment, the electric interface is configured for connecting at least two sensors and configured such that the switching device is configured to selectively apply electric signal onto the three pins of the connector allowing to selectively receive sensor signals from the at least two connected sensors or to supply a voltage to the at least one electric load. This allows to provide a reading of two sensors and the control and/or voltage supply for at least one load via a three-pin connector. The switching device allows to change the configuration of the pins so that via these pins either the sensor are read or the voltage to the load is supplied. Although it is not possible to provide all these properties at the same time, i. e. to read all sensor signals and to control all loads at the same time, it will become possible to provide these expanded control functionalities via a three-pin connector, i. e. preferably an existing three-pin connector. The different control functions are, thus, provided sequentially.

According to a further preferred embodiment the electric interface is configured for connecting two electric loads and the electric interface is configured such that the switching device selectively applies electric signals onto the three pins of the connector allowing to selectively receive sensor signals from the connected sensor or sensors or to selectively supply a voltage to one or both electric loads. Thus, according to this embodiment there are two electric loads and at least one sensor, preferably at least two sensors which can be selectively connected to the control device so that the control device can receive sensor signals or control one or both of the electric loads. By use of the switching device the at least one sensor and the two-electric loads are selectively connected to the control device, i. e. not at the same time. Thus, the control device for example may control a first load or the second load depending on the switching position of the switching device. In a further alternative switching position one or two sensors may be connected to the control device to receive values from those sensors. Also these may be done sequentially depending on the switching position of the switching device.

According to a preferred embodiment the electric interface and the switching device are configured such that a first pin of the three-pin connector is a ground connection, preferably a permanent ground connection. This means that the function of this first pin is not altered by the switching device. It is a permanently connected ground connection.

In a further embodiment of the control device the first pin of the three-pin connector is configured for connection with a first terminal of a first sensor and with a first terminal of a second sensor as well as for connection with a first terminal of the at least one electric load, preferably the first terminals of two electric loads. This means that all devices to be connected with a three-pin connector are connected to the ground connection with one of their terminals. This ground connection of all the devices preferably is a permanent connection which is not switched on and off by the switching device.

According to a further possible embodiment of the control device a second pin of the three-pin connector is configured for connection with a second terminal of the first sensor and a third pin of the three-pin connector is configured for connection with a second terminal of the second sensor. According to this embodiment two sensors are provided, a first one connected to the first and the second pin and the second one connected to the first and the third pin. The switching device may be configured to apply voltages to both sensors at the same time, i. e. to allow a sensor reading at the same time in parallel. For actuating the control of the at least one electronic load, the switching device may switch off at least one of the sensor connections or sensor readings and use a respective pin of the connector for applying a voltage to the at least one electric load. That is, the switching device can switch the operation between a sensor and the electric load.

In a further embodiment the second and/or the third pin of the three-pin connector are configured for connection with a second terminal of the at least one electric load. In case that two electric loads are provided, the second and the third pin may be used to connect electric loads. Thus, preferably in the electric interface the second pin of the three-pin connector is configured for connection with a second terminal of a first electric load and the third pin of the three-pin connector is configured for connection with a second terminal of a second electric load. Thus, two electric loads can be operated or controlled in parallel. In this operational state the two sensors are switched off, i. e. are not supplied with a sensor voltage for reading a measurement by the sensor. Instead of switching between control of the electric loads and the sensors, it may also be possible to switch the voltage supply to the three-pin connector such that one sensor can be operated in parallel to one electric load. For example, the switching device may apply a sensor voltage between a first and the second pin and at the same time apply a voltage for operation of one electric load between the first pin and the third pin. This allows to read sensor signals from one sensor and to control an electric load in parallel at the same time.

According to a further embodiment the switching device is configured to selectively apply a first voltage or a second voltage between the first pin and the second pin of the three-pin connector. The first and second voltage preferably are DC-voltages having opposite polarities and/or are of different absolute values. Thus, the switching device can change the voltage between the first and the second pin between a first voltage and a second voltage, whereas the voltages have different polarities and/or may have a different absolute value. For example, for the sensor connection there may be used a lower voltage whereas for controlling or operating the electric load a higher voltage is applied between the first and the second pin. The sensors and/or electric loads connected to the three-pin connector or a wiring harness between those devices and the three-pin connector are configured such by change of the voltage the different devices can be addressed or operated, respectively. For example, diodes may be provided in the harness by which the desired connection depending on the different polarity of the voltage can be provided. Alternatively the electric load may be configured such that it cannot be operated with a lower voltage so that it does not react on a lower voltage below a predefined threshold. Thus, for operation of the electric load the voltage must exceed this predefined threshold.

Furthermore, in a further embodiment the switching device can be configured to selectively apply a third voltage between the first pin and the third pin of the three-pin connector. This third voltage can be a voltage to operate a sensor connected to the first and third pin or to operate and control an electric load connected to these pins.

In a preferred embodiment the electric interface and the switching device are configured such that the third voltage has a polarity opposite to the polarity of the first voltage applied between the first and the second pin. The first and the third voltage may, however, have the same absolute value. By use of a diode in the harness or in the connected devices, the operation of the desired device can be addressed by the control device by switching the polarity to the opposite, for example between the first and the second and/or the first and the third pin. This means, by changing the polarity different devices can be addressed or operated.

According to a further preferred embodiment the switching device is configured to selectively apply a third voltage or a fourth voltage between the first and the third pin of the three-pin connector, the third and the fourth voltage preferably are DC-voltages having opposite polarities and/or are of different absolute values. In this embodiment, therefore, also via the first and the third pin different devices can be addressed or operated by changing the voltage between the third and the fourth voltage. The connected devices may be configured such that one device is operated with the third voltage and the other device is operated with a fourth voltage. As mentioned before, this may be done by different absolute values and configuring the devices such that they react on certain voltage thresholds or do not operate in a certain voltage range. A response to the different polarity may be achieved by providing diodes in the connected harness or devices so that for example a first device is operated with a first polarity of the voltage and a second device is operated by the opposite polarity of the voltage.

According to a further possible embodiment the switching device may be configured such that the first and the third voltage are of identical absolute values and/or identical polarity, and that preferably the second and the fourth voltage are of identical absolute values and/or identical polarity. According to a preferred embodiment between each pair of connector pins, i. e. the first and the second connector pin and the first and the third connector pin, two different voltages can be applied by the switching device. This, for example allows to switch between a sensor and an electric load for each pair of connector pins, resulting in addressing or operating two sensors and two electric actuators in total. In a special configuration of the switching device a third sensor may be addressed or operated between the second and third connector pin. This can be achieved by switching the third pin to ground connection. For this, preferably the switching device is configured to selectively connect the second and/or the third pin to ground connection. This allows to apply a voltage between the second and third connector pin for operating or reading a third sensor.

Preferably, the electric interface is configured for connecting an electric load being a relay, a valve drive, a heating element, a PWM device and/or an alarm device. This allows to control or operate different devices in a hydronic system by the control device which preferably is a control device integrated into a pump unit. Any suitable electric load may be operated in this way. The electric interface is configured to apply the required voltage and electric power for operating the electric load.

Furthermore, the control device, preferably comprises at least one corresponding harness which is configured for connecting the at least one load to the three-pin connector. Further, preferably the harness is configured to connect the at least one sensor or several sensors with a three-pin connector, too. The harness in one possible embodiment comprises at least one diode, preferably located in a conductor connected to the second or third pin of the three-pin connector. This diode prevents the operation of a connected device if the voltage has the wrong polarity. This allows to activate or control this device by switching the switching device to the required voltage polarity.

According to a further possible embodiment, the switching device is configured to selectively connect at least the second and the third pin of the three-pin connector to a data communication interface of the control device or a data input interface of the control device. The control device for example may be configured to receive a PWM-signal as an input signal and to carry out a control on basis of the received signal. The switching device may be configured to switch the electric interface into a data communication mode in which at least the second and the third pin, preferably all three pins are used for data communication instead of controlling one or more electric loads or reading one or more connected sensors as described above. The control device for example may communicate with an external control device or higher-level control device via the electric interface. In case that the control device is a control device of a pump unit the control device may for example receive a control signal representing the desired speed of the pump via the three-pin connector in a data communication mode.

Besides the control device as explained before, a further subject matter of the invention is a pump unit. The pump unit comprises a pump having an electric drive motor, for example, a centrifugal pump with a rotatable impeller driven by the electric drive motor. Such a pump unit in particular may be a circulator pump configured for use in a hydronic system like a heating and/or cooling system. In such a circulator pump the electric drive motor preferably is a wet-running drive motor having a rotor can between stator and rotor space. The pump unit comprises a control device as described above. The control device may be a control device controlling the electric drive motor of the pump unit. The control device preferably is arranged in a motor housing of the electric drive motor or an electronics housing attached to a mo-for housing of the electric drive motor. Thus, the control device is integrated into the pump unit. According to the invention the control device integrated into the pump unit can control further devices like at least one electric load and receive data signals from at least one sensor connected to the electric interface having the three-pin connector.

A further preferred subject of the invention is a hydronic system having a control device or a pump unit as described above. This hydronic system preferably comprises a first sensor connected to the first and the second pin and a second sensor connected to the first and the third pin of the three-pin connector. Furthermore, the hydronic system preferably comprises at least one electric load which is connected to the first and the second pin of the three-pin connector. In a further possible embodiment there may be provided a second electric load connected to the first and the third pin of the three-pin connector. Furthermore, a third sensor may be connected to the second and third pin. By switching the voltages between the pin as described above, it is possible to read the sensor signals from each sensor and to selectively activate the electric loads, i. e. to control the electric loads. At the time, when the electric load or loads are operated, the reading of the respective sensors connected to the same pins is switched off by the switching device, by changing the voltage applied between the respective pins.

Preferably the hydronic system comprises at least one valve device having an electric valve drive, preferably an electric motor or a thermoelectric drive, being the at least one electric load which is connected to the electric interface of the control device. This valve for example may be a mixing valve in a heating system used for adjusting feed temperature for a heating circuit. Another example for an electric load connected to the electric interface may be a changeover valve used for change a fluid flow through different flow paths in a hydraulic or hydronic system. The control device according to the invention preferably allows to control such a valve like for example a mixing valve by use of the control device of the pump unit.

Furthermore, the hydronic system preferably comprises a first and a second sensor which may be a temperature sensor and/or a pressure sensor and/or a flow sensor. For example, the sensors may be used to detect flow and temperature in a system to adjust the feed flow of a pump unit and/or the valve position of a mixing valve as mentioned before. This allows to control an essential part or the entire hydronic system by use of the control device of the pump unit. The switching device allows to connect all necessary external components to the control device via a three-pin connector. The switching device switches between communication and/or control of the external devices as described above.

In the following the invention will be described by way of an example with reference to the accompanying drawings. In these:
- Fig. 1: schematically shows a hydronic system comprising a control device according to the invention,

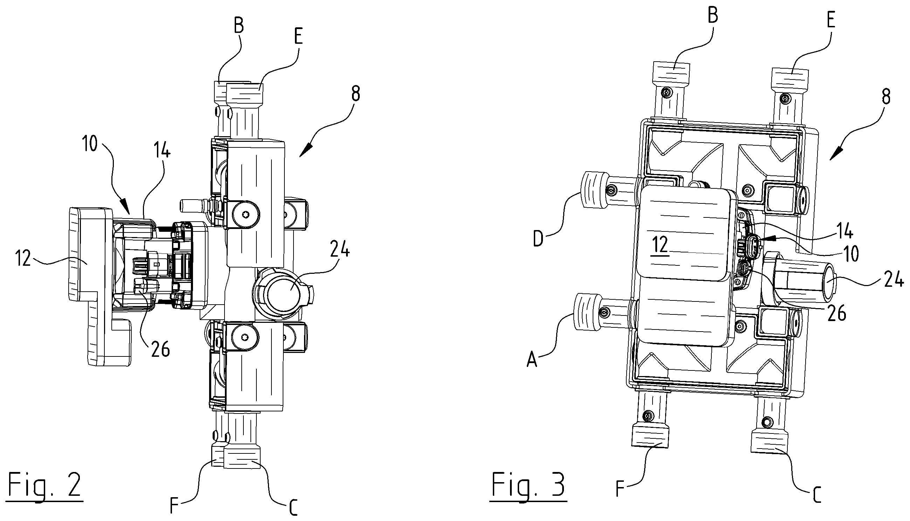

- Fig. 2: shows a side view of a hydraulic unit used in the hydraulic system according to figure 1,
- Fig. 3: shows a perspective view of the hydraulic unit according to figure 2,
- Fig. 4: shows an example for an electric interface used in the control device used in the hydraulic system according to figure 1, and
- Fig. 5: shows an alternative electric interface of a control device.

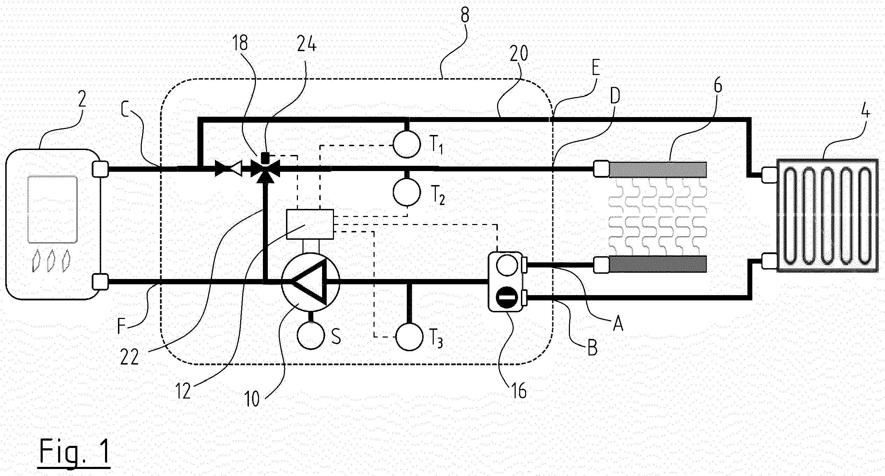

Figure 1 shows an example of a hydronic system in form of a heating system. The system comprises a thermal source, in this example a boiler 2, a first load circuit 4, in this case a radiator heating circuit, and a second load circuit 6, in this example a floor heating circuit. For supplying the first load circuit 4 and the second load circuit 6 with thermal energy delivered by the boiler 2, there is arranged a hydraulic device, i. e. an integrated hydraulic unit 8. The hydraulic unit 8 comprises a circulator pump 10 with a control unit or control device 12. The control device 12 is arranged in a motor and electronics housing 14 attached to the circulator pump 10, i. e. to the pump housing of the circulator pump 10. Furthermore, the hydraulic unit 8 comprises a changeover valve 16 and a mixing valve 18. The changeover valve 16 and the mixing valve 18 are controlled by the control device 12, which is provided for control of the circulator pump 10, too. The hydraulic unit 8 comprises six hydraulic connections or ports A-F. A first hydraulic connection A and a second hydraulic connection B are connected with a changeover valve 16 which can selectively connect one of the connections A and B with the inlet or suction side of the circulator pump 10. In this example the first hydraulic connection A is a return for the second load circuit, whereas the hydraulic connection B acts as a return port for the first load circuit 4. The third hydraulic connection or port C is an inlet port connected to the boiler 2, i. e. is a feed connection through which hot heat transfer medium, like water, enters the hydraulic unit 8. The fourth hydraulic connection D is a feed connection connected to the inlet side of the second load circuit 6. The fifth hydraulic connection or port E is a feed connection for the first load circuit 4 and the sixth hydraulic connection F is a return connection connected to a return line towards the boiler 2.

Inside the hydraulic unit 8 there is a flow path 20 directly connecting the two hydraulic connections C and E allowing a direct fluid flow from the outlet side of the boiler 2 towards the feed or inlet side of the first load circuit 4. The mixing valve 18 is connected to the hydraulic connection C, too, and on its outlet side connected to the hydraulic connection D being a feed connection for the second load circuit 6. There is a further flow path 22 connecting the outlet or pressure side of the circulator pump 10 with the third port of the mixing valve 18. Via this flow path 22 heat transfer medium from the return of the load circuits 4, 6 flows towards the mixing valve 18. Inside the mixing valve a flow from the flow path 22 and a flow from the hydraulic connection C are mixed to reduce the temperature of the fluid entering via port C and to provide a reduced temperature of heat transfer medium at the hydraulic connection or port D, i. e. the feed towards the second load circuit 6, which preferably is a floor heating circuit. The mixing ratio achieved by the mixing valve 18 is adjusted by the control device 12 connected to an actor 24, for example a thermoelectric actor moving or adjusting the mixing valve 18. The changeover valve 16 is controlled by the control device 12, too, either by an electric actor integrated into the changeover valve 16 or hydraulically via pressure and/or flow produced by the circulator pump 10. The changeover valve 16 depending on its valve position activates a fluid flow through the first load circuit 4 or the second load circuit 6 by opening the respective return connection.

For the control in this example, there are provided three temperature sensors T₁, T₂, and T₃. Furthermore, there is a flow detection means or flow sensor S integrated into the circulator pump 10. All the sensors are connected to the control device 12 so that the control device 12 can control the actors and the circulator pump 10 based on values detected by these sensors.

The control device comprises an electric interface 26 in form of a three-pin connector. This is a three-pin connector which may typically be used for data communication, or for applying a PWM signal to the control device 12. The three-pin connector 26 has three contract pins 28, 30 and 32. The control device includes a switching device 34 allowing to switch between different voltages applied to the three contact pins 28, 30, 32.

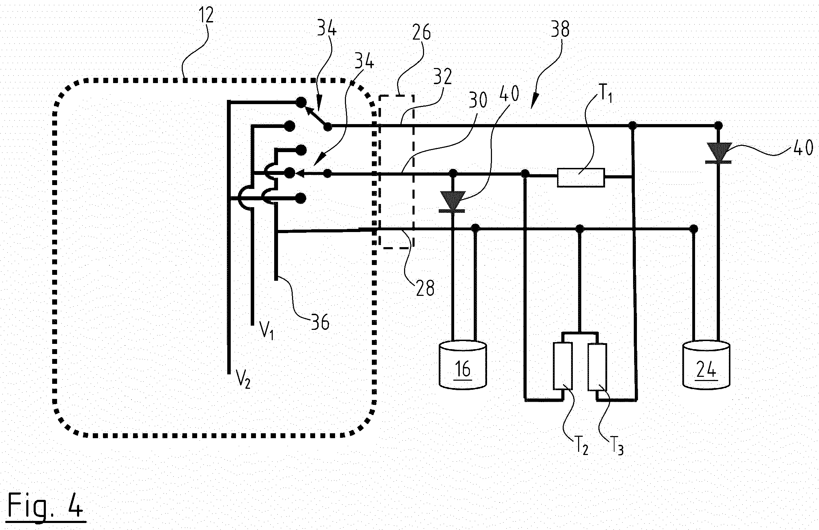

The first contact pin 28 is permanently connected to a ground connection 36. By use of a harness 38, the three sensors T₁, T₂, and T₃ as well as two electric loads, in these examples the actor of the changeover valve 16 and the actor 24 of the mixing valve 18 are connected to the three pins 28, 30 and 32. In this example the control device provides two different voltages V₁ and V₂. The voltage V₁ in this example may be a voltage of - 5 volt DC used to read the sensor values from temperature sensors T₁, T₂, and T₃. The voltage V₂ may be a higher voltage, for example + 24 volt DC for activating or controlling the actors 16 and 24. Figure 4 shows a first switching position of the switching device 34 in which the voltage V₁ is supplied to the second contact pin 30 and via the harness 38 to the temperature sensor T₂ and the temperature sensors T₁ and T₃ which in this condition are connected in series. Furthermore, the voltage V₂ is applied to the third pin 32 to activate or control the actor 24. In this condition the actuator 24 is controlled and activated via the control device 12, i. e. the control device 12 can control the mixing valve 18. At the same time temperature values detected by the three temperature sensors T₂, T₁ and T₃ can be detected. To activate or control the electric load 16, the switching device 34 connects the second pin 30 with the second voltage V₂.

For reading temperature sensor T₂, the second pin 30 and the third pin 32 are both connected to the voltage V₁. In this condition both sides of the temperature sensor T₁ are connected to the same voltage V₁ so the current over this sensor is zero. Thus, the sensor T₂ is arranged between the first pin 28 and the second pin 30 and the sensor T₃ between the first pin 28 and the second pin 32. Thus, via the second pin 30 a current representing the resistance of sensor T₂ and a corresponding temperature value at the temperature sensor T₂ can be detected. Via the third pin 32 the temperature value from temperature T₃ can be detected by evaluating the current at the third pin 32. To detect the temperature value from sensor T₁, the third pin 32 is connected to the ground connection 36 so that the temperature sensor T₃ on both sides is connected to ground connection and no current through temperature sensor T₃ occurs. The temperature sensors T₁ and T₂ in this connection are in parallel and the second pin 30 reflects the parallel resistance of temperature sensors T₂ and T₃. Since the resistance of temperature sensor T₂ has been detected before separately, the resistance of temperature sensor T₁, then can be calculated to derive a temperature value at temperature sensor T₁. Thus, by use of the switching device 34, the values of three sensors can be detected. The values represent resistances which can be measured by evaluating the current measured on the respective contact pin 30 or 32. The actors 16 and 24 can be activated and controlled by applying the higher voltage V₂ onto the respective contact pins 30 and 32. Furthermore, the second voltage V₂ has an opposite polarity compared to the first voltage V₁. In the harness 38 in the connection towards the loads 16 and 24 there are provided diodes 40 directed such that the voltage V₁ because of its polarity is blocked. The diodes 40 are arranged such that the voltage 24 can pass and activate the electric loads 16 and 24.

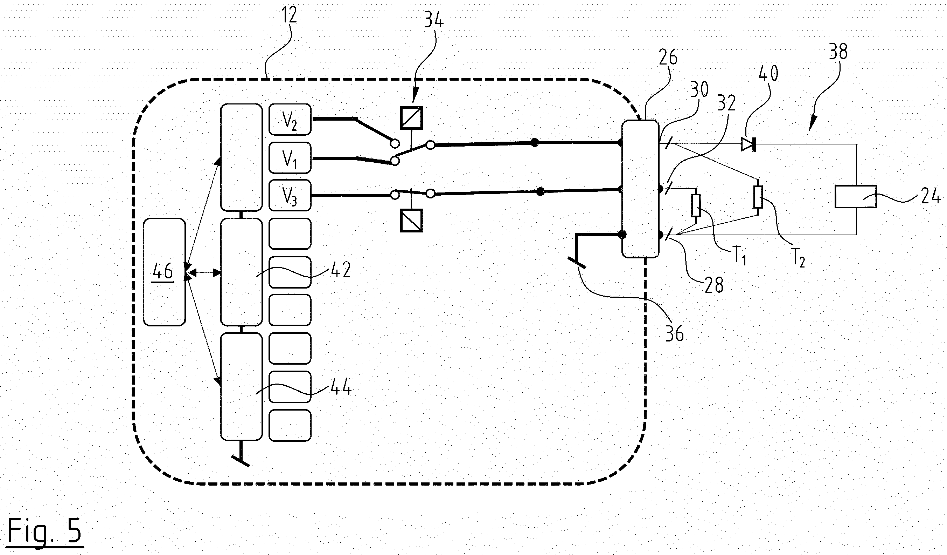

Figure 5 shows a second example of a control device 12 in which only two temperatures T₁ and T₂ and one electric load 24 are connected to the electric interface 26. To address and control these two temperature sensors T₁ and T₂ and the electric load 24 in this example the control device 12 provides three voltages V₁, V₂ and V₃. As in the first example the first voltage V₁ may for example a voltage of - 5 Volt DC, whereas the second voltage V₂ is a voltage of + 24 Volt DC. In this example the third voltage V₃ for example may be a voltage of + 5 Volt DC. Also in this example the first pin 28 is permanently connected to a ground connection 36. Both temperature sensors T₁ and T₂ and the electric load 24 with one terminal each are connected to this first pin 28 and thereby to the ground connection 36. To activate the electric load 24 and to control the electric load 24, the switching device 34 connects the third pin 30 with the second voltage V₂, thus, via the diode 40 in the harness 38 the electric load 24 is supplied with the voltage V₂ for its activation and control. To read temperature sensor T₂ switching device 34 connects the second pin 30 to the first voltage V₁. Since this voltage has a negative polarity opposite to the polarity of voltage V₂, this voltage is kept away from the load 24 due to the diode 40. Thus, the voltage V₁ is applied to temperature sensor T₂ and by evaluating the current at pin 30 the resistance representing of temperature sensor T₂ representing a temperature can be detected. For reading temperature sensor T₁, the voltage V₃ is applied to the third pin 32 and by evaluating the current at pin 32 it is possible to evaluate the resistance of temperature sensor T₁ and, thus the temperature at temperature sensor T₁.

By the switching device 34 all connections may be switched off and the electric interface 38 may be connected to the data communication device 42 or input means 44. The changes of functionality by the switching device 34 are controlled by a micro controller 46. The alternative use for data communication or input may also be applied to the embodiment according to figure 4. Thus, the invention allows to use a three-pin connector of a control device 12 for different purposes and in particular for reading two or three sensors and controlling one or two electric loads.

### List of reference numerals

- 2: boiler
- 4: first load circuit
- 6: second load circuit
- 8: hydraulic unit
- 10: circulator pump
- 12: control device
- 14: motor and electronics housing
- 16: changeover valve
- 18: mixing valve
- 20: flow path
- 22: flow path
- 24: actor
- A-F: hydraulic connections
- T₁, T₂, T₃: temperature sensors
- S: flow detection means
- 26: electric interface
- 28, 30, 32: contact pins
- 34: switching device
- 36: ground connection
- 38: harness
- 40: diodes
- 42: communication means
- 44: input means
- 46: micro controller
- V₁, V₂, V₃: voltages

## Claims

1. Control device (12) configured for control of a pump unit (10) or a hydronic system, the control device (12) comprising an electric interface (26) configured for connecting at least one sensor (T₁, T₂, T₃) and at least one electric load (16, 24) with the control device (12),
wherein
the electric interface (26) is a three-pin connector, and the control device (12) includes a switching device (34),
**characterized in that**
the switching device (34) is configured to selectively apply electric signals (V₁, V₂, V₃) onto the three pins (28, 30, 32) of the connector allowing to selectively receive sensor signals from the at least one connected sensor (T₁, T₂, T₃) or to supply a voltage (V₂) to the at least one electric load (16, 24).

2. Control device according to claim 1, **characterized in that** the electric interface (26) is configured for connecting at least two sensors (T₁, T₂, T₃) and such that the switching device (34) is configured to selectively apply electric signals (V₁, V₂, V₃) onto the three pins (28, 30, 32) of the connector allowing to selectively receive sensor signals from the at least two connected sensors (T₁, T₂, T₃) or to supply a voltage(V₂) to the at least one electric load (16, 24).

3. Control device according to claim 1 or 2, **characterized in that** the electric interface (26) is configured for connecting two electric loads (16, 24) and such that the switching device (34) is configured to selectively apply electric signals (V₁, V₂, V₃) onto the three pins (28, 30, 32) of the connector allowing to selectively receive sensor signals from the connected sensor or sensors (T₁, T₂, T₃) or to selectively supply a voltage (V₂) to one or both electric loads (16, 24).

4. Control device according to one of the claims 1 to 3, **characterized in that** the electric interface (26) and the switching device (34) are configured such that a first pin (28) of the three-pin connector is a ground connection (36), preferably a permanent ground connection.

5. Control device according to one of the preceding claims, **characterized in that** the first pin (28) of the three-pin connector is configured for connection with a first terminal of a first sensor (T₂) and with a first terminal of a second sensor (T₁) and for connection with a first terminal of the at least one electric load (16, 24).

6. Control device according to one of the preceding claims, **characterized in that** a second pin (30) of the three-pin connector is configured for connection with a second terminal of the first sensor (T₂) and a third pin (32) of the three-pin connector is configured for connection with a second terminal of the second sensor (T₁).

7. Control device according to one of the preceding claims, **characterized in that** the second (30) and/or the third pin (32) of the three-pin connector are configured for connection with a second terminal of the at least one electric load (16, 24), wherein preferably in the electric interface (26) the second pin (30) of the three-pin connector is configured for connection with a second terminal of a first electric load (16) and the third pin (32) of the three-pin connector is configured for connection with a second terminal of a second electric load (24).

8. Control device according to one of the preceding claims, **characterized in that** the switching device (34) is configured to selectively apply a first voltage (V₁) or a second voltage (V₂) between the first pin (28) and the second pin (30) of the three-pin connector, the first (V1) and the second voltage (V₂) preferably are DC-voltages having opposite polarities and/or are of different absolute values.

9. Control device according to one of the preceding claims, **characterized in that** the switching device (34) is configured to selectively apply a third voltage (V₃) between the first pin (28) and the third pin (32) of the three-pin connector, wherein preferably the electric interface (26) and the switching device (34) are configured such that the third voltage (V₃) has a polarity opposite to the polarity of the first voltage (V₁) applied between the first (26) and the second pin (30).

10. Control device according to one of the preceding claims, **characterized in that** the switching device (34) is configured to selectively apply a third voltage (V₃) or a fourth voltage between the first pin (28) and the third pin (32) of the three-pin connector, the third (V₃) and the fourth voltage preferably are DC-voltages having opposite polarities and/or are of different absolute values.

11. Control device according to one of the preceding claims, **characterized in that** the switching device (34) is configured such that the first (V₁) and the third voltage (V₃) are of identical absolute values and/or identical polarity, and that preferably the second (V₂) and the fourth voltage are of identical absolute values and/or identical polarity.

12. Control device according to one of the preceding claims, **characterized in that** the switching device (34) is configured to selectively connect the second (30) and/or third pin (32) to ground connection (36).

13. Control device according to one of the preceding claims, **characterized in that** the electric interface (26) is configured for connecting an electric load (16, 24) being a relay, a valve drive, a heating element, a PWM device and/or an alarm device.

14. Control device according to one of the preceding claims, **characterized by** at least one harness (38) configured for connecting the at least one load (16, 24) to the three-pin connector, the harness comprising at least one diode (40), preferably located in a connector connected to the second (30) or third pin (32) of the three-pin connector.

15. Control device according to one of the preceding claims, **characterized in that** the switching device (34) is configured to selectively connect at least the second (30) and the third pin (32) of the three-pin connector to a data communication interface (42) of the control device (12) or a data input interface (44) of the control device.

16. Pump unit (10) comprising a pump having an electric drive motor, **characterized by** a control device (12) according to one of the preceding claims, wherein the control device (12) preferably controls the electric drive motor.

17. Hydronic system **characterized by** a control device according to one of the claims 1 to 15 or a pump unit according to claim 16, the hydronic system comprising a first sensor (T₂) connected to the first (28) and the second pin (30) and a second sensor connected to the first (28) and the third pin (32) and at least one electric load (16, 24) connected to the first (28) and the second pin (30) of the three-pin connector, wherein preferably the first (T₂) and the second sensor (T₁) are a temperature sensor and/or a pressure sensor and/or a flow sensor, and/or wherein the hydronic system preferably comprises at least one valve device (18) having an electric valve drive (24), preferably a thermoelectric drive, being the at least one electric load which is connected to the electric interface (26) of the control device (12).

## Patentansprüche

1. Steuerungsvorrichtung (12), die für eine Steuerung einer Pumpeneinheit (10) oder eines hydronischen Systems konfiguriert ist, wobei die Steuerungsvorrichtung (12) eine elektrische Schnittstelle (26) umfasst, die zum Verbinden mindestens eines Sensors (T₁, T₂, T₃) und mindestens einer elektrischen Last (16, 24) mit der Steuerungsvorrichtung (12) konfiguriert ist,
wobei die elektrische Schnittstelle (26) ein dreipoliger Verbinder ist und die Steuerungsvorrichtung (12) eine Schaltvorrichtung (34) einschließt,
**dadurch gekennzeichnet, dass** die Schaltvorrichtung (34) dafür konfiguriert ist, selektiv elektrische Signale (V₁, V₂, V₃) an die drei Pole (28, 30, 32) des Verbinders anzulegen, was es ermöglicht, selektiv Sensorsignale von dem mindestens einen angeschlossenen Sensor (T₁, T₂, T₃) zu empfangen oder der mindestens einen elektrischen Last (16, 24) eine Spannung (V₂) zuzuführen.

2. Steuerungsvorrichtung nach Anspruch 1, **dadurch gekennzeichnet, dass** die elektrische Schnittstelle (26) zum Anschließen von mindestens zwei Sensoren (T₁, T₂, T₃) konfiguriert ist und derart, dass die Schaltvorrichtung (34) dafür konfiguriert ist, selektiv elektrische Signale (V₁, V₂, V₃) an die drei Pole (28, 30, 32) des Verbinders anzulegen, was es ermöglicht, selektiv Sensorsignale von den mindestens zwei angeschlossenen Sensoren (T₁, T₂, T₃) zu empfangen oder der mindestens einen elektrischen Last (16, 24) eine Spannung (V₂) zuzuführen.

3. Steuerungsvorrichtung nach Anspruch 1 oder 2, **dadurch gekennzeichnet, dass** die elektrische Schnittstelle (26) zum Anschließen von zwei elektrischen Lasten (16, 24) konfiguriert ist und derart, dass die Schaltvorrichtung (34) dafür konfiguriert ist, selektiv elektrische Signale (V₁, V₂, V₃) an die drei Pole (28, 30, 32) des Verbinders anzulegen, was es ermöglicht, selektiv Sensorsignale von dem/den angeschlossenen Sensor oder Sensoren (T₁, T₂, T₃) zu empfangen oder selektiv einer oder beiden elektrischen Lasten (16, 24) eine Spannung (V₂) zuzuführen.

4. Steuerungsvorrichtung nach einem der Ansprüche 1 bis 3, **dadurch gekennzeichnet, dass** die elektrische Schnittstelle (26) und die Schaltvorrichtung (34) derart konfiguriert sind, dass ein erster Pol (28) des dreipoligen Verbinders des dreipoligen Verbinders ein Erdungsanschluss (36), vorzugsweise ein dauerhafter Erdungsanschluss, ist.

5. Steuerungsvorrichtung nach einem der vorhergehenden Ansprüche, **dadurch gekennzeichnet, dass** der erste Pol (28) des dreipoligen Verbinders für eine Verbindung mit einem ersten Anschluss eines ersten Sensors (T₂) und mit einem ersten Anschluss eines zweiten Sensors (T₁) und für eine Verbindung mit einem ersten Anschluss der mindestens einen elektrischen Last (16, 24) konfiguriert ist.

6. Steuerungsvorrichtung nach einem der vorhergehenden Ansprüche, **dadurch gekennzeichnet, dass** ein zweiter Pol (30) des dreipoligen Verbinders für eine Verbindung mit einem zweiten Anschluss des ersten Sensors (T₂) konfiguriert ist und ein dritter Pol (32) des dreipoligen Verbinders für eine Verbindung mit einem zweiten Anschluss des zweiten Sensors (T₁) konfiguriert ist .

7. Steuerungsvorrichtung nach einem der vorhergehenden Ansprüche, **dadurch gekennzeichnet, dass** der zweite (30) und/oder der dritte Pol (32) des dreipoligen Verbinders für eine Verbindung mit einem zweiten Anschluss der mindestens einen elektrischen Last (16, 24) konfiguriert sind, wobei vorzugsweise in der elektrischen Schnittstelle (26) der zweite Pol (30) des dreipoligen Verbinders für eine Verbindung mit einem zweiten Anschluss einer ersten elektrischen Last (16) konfiguriert ist und der dritte Pol (32) des dreipoligen Verbinders für eine Verbindung mit einem zweiten Anschluss einer zweiten elektrischen Last (24) konfiguriert ist.

8. Steuerungsvorrichtung nach einem der vorhergehenden Ansprüche, **dadurch gekennzeichnet, dass** die Schaltvorrichtung (34) dafür konfiguriert ist, selektiv eine erste Spannung (V₁) oder eine zweite Spannung (V₂) zwischen dem ersten Pol (28) und dem zweiten Pol (30) des dreipoligen Verbinders anzulegen, wobei die erste (V₁) und die zweite Spannung (V₂) vorzugsweise GS-Spannungen sind, die entgegengesetzte Polaritäten aufweisen und/oder von unterschiedlichen absoluten Werten sind.

9. Steuerungsvorrichtung nach einem der vorhergehenden Ansprüche, **dadurch gekennzeichnet, dass** die Schaltvorrichtung (34) dafür konfiguriert ist, selektiv eine dritte Spannung (V₃) zwischen dem ersten Pol (28) und dem dritten Pol (32) des dreipoligen Verbinders anzulegen, wobei vorzugsweise die elektrische Schnittstelle (26) und die Schaltvorrichtung (34) derart konfiguriert sind, dass die dritte Spannung (V₃) eine Polarität, entgegengesetzt zu der Polarität der ersten Spannung (V₁), die zwischen dem ersten Pol (26) und dem zweiten Pol (30) angelegt wird, aufweist.

10. Steuerungsvorrichtung nach einem der vorhergehenden Ansprüche, **dadurch gekennzeichnet, dass** die Schaltvorrichtung (34) dafür konfiguriert ist, selektiv eine dritte Spannung (V₃) oder eine vierte Spannung zwischen dem ersten Pol (28) und dem dritten Pol (32) des dreipoligen Verbinders anzulegen, wobei die dritte (V₃) und die vierte Spannung vorzugsweise GS-Spannungen sind, die entgegengesetzte Polaritäten aufweisen und/oder von unterschiedlichen absoluten Werten sind.

11. Steuerungsvorrichtung nach einem der vorhergehenden Ansprüche, **dadurch gekennzeichnet, dass** die Schaltvorrichtung (34) derart konfiguriert ist, dass die erste (V₁) und die dritte Spannung (V₃) von identischen absoluten Werten und/oder identischer Polarität sind und dass vorzugsweise die zweite (V₂) und die vierte Spannung von identischen absoluten Werten und/oder identischer Polarität sind.

12. Steuerungsvorrichtung nach einem der vorhergehenden Ansprüche, **dadurch gekennzeichnet, dass** die Schaltvorrichtung (34) dafür konfiguriert ist, selektiv den zweiten (30) und/oder den dritten Pol (32) an den Erdungsanschluss (36) anzuschließen.

13. Steuerungsvorrichtung nach einem der vorhergehenden Ansprüche, **dadurch gekennzeichnet, dass** die elektrische Schnittstelle (26) zum Anschließen einer elektrischen Last (16, 24) konfiguriert ist, die ein Relais, ein Ventilantrieb, ein Heizelement, eine PWM-Vorrichtung und/oder eine Alarmvorrichtung ist.

14. Steuerungsvorrichtung nach einem der vorhergehenden Ansprüche, **gekennzeichnet durch** mindestens einen Kabelbaum (38), der zum Anschließen der mindestens einen Last (16, 24) an den dreipoligen Verbinder konfiguriert ist, wobei der Kabelbaum mindestens eine Diode (40) umfasst, die vorzugsweise in einem Verbinder angeordnet ist, der an den zweiten (30) oder den dritten Pol (32) des dreipoligen Verbinders angeschlossen ist.

15. Steuerungsvorrichtung nach einem der vorhergehenden Ansprüche, **dadurch gekennzeichnet, dass** die Schaltvorrichtung (34) dafür konfiguriert ist, selektiv mindestens einen von dem zweiten (30) und dem dritten Pol (32) des dreipoligen Verbinders an eine Datenkommunikationsschnittstelle (42) der Steuerungsvorrichtung (12) oder eine Dateneingabeschnittstelle (44) der Steuerungsvorrichtung anzuschließen.

16. Pumpeneinheit (10), die eine Pumpe umfasst, die einen elektrischen Antriebsmotor aufweist, **gekennzeichnet durch** eine Steuerungsvorrichtung (12) nach einem der vorhergehenden Ansprüche, wobei die Steuerungsvorrichtung (12) vorzugsweise den elektrischen Antriebsmotor steuert.

17. Hydronisches System, **gekennzeichnet durch** eine Steuerungsvorrichtung nach einem der Ansprüche 1 bis 15 oder eine Pumpeneinheit nach Anspruch 16, wobei das hydronische System einen ersten Sensor (T₂), der an den ersten (28) und den zweiten Pol (30) angeschlossen ist, und einen zweiten Sensor, der an den ersten (28) und den dritten Pol (32) angeschlossen ist, und mindestens eine elektrische Last (16, 24), die an den ersten (28) und den zweiten Pol (30) des dreipoligen Verbinders angeschlossen ist, umfasst, wobei vorzugsweise der erste (T₂) und der zweite Sensor (T₁) ein Temperatursensor und/oder ein Drucksensor und/oder ein Durchfluss-Sensor sind, und/oder, wobei das hydronische System mindestens eine Ventilvorrichtung (18) umfasst, die einen elektrischen Ventilantrieb (24), vorzugsweise einen thermoelektrischen Antrieb, aufweist, der die mindestens eine elektrische Last ist, die an die elektrische Schnittstelle (26) der Steuerungsvorrichtung (12) angeschlossen ist.

## Revendications

1. Dispositif de commande (12) configuré pour commander une unité de pompe (10) ou un système hydronique, le dispositif de commande (12) comprenant une interface électrique (26) configurée pour connecter au moins un capteur (T₁, T₂, T₃) et au moins une charge électrique (16, 24) au dispositif de commande (12), dans lequel l'interface électrique (26) est un connecteur à trois broches, et le dispositif de commande (12) inclut un dispositif de commutation (34),
**caractérisé en ce que** le dispositif de commutation (34) est configuré pour appliquer sélectivement des signaux électriques (V₁, V₂, V₃) sur les trois broches (28, 30, 32) du connecteur permettant de recevoir sélectivement des signaux de capteur de l'au moins un capteur (T₁, T₂, T₃) connecté ou de fournir une tension (V₂) à l'au moins une charge électrique (16, 24).

2. Dispositif de commande selon la revendication 1, **caractérisé en ce que** l'interface électrique (26) est configurée pour connecter au moins deux capteurs (T₁, T₂, T₃) et **en ce que** le dispositif de commutation (34) est configuré pour appliquer sélectivement des signaux électriques (V₁, V₂, V₃) sur les trois broches (28, 30, 32) du connecteur permettant de recevoir sélectivement des signaux de capteur des au moins deux capteurs (T₁, T₂, T₃) connectés ou de fournir une tension (V₂) à l'au moins une charge électrique (16, 24).

3. Dispositif de commande selon la revendication 1 ou 2, **caractérisé en ce que** l'interface électrique (26) est configurée pour connecter deux charges électriques (16, 24) et **en ce que** le dispositif de commutation (34) est configuré pour appliquer sélectivement des signaux électriques (V₁, V₂, V₃) sur les trois broches (28, 30, 32) du connecteur permettant de recevoir sélectivement des signaux de capteur du ou des capteurs (T₁, T₂, T₃) connectés ou de fournir sélectivement une tension (V₂) à l'une ou aux deux charges électriques (16, 24).

4. Dispositif de commande selon l'une des revendications 1 à 3, **caractérisé en ce que** l'interface électrique (26) et le dispositif de commutation (34) sont configurés de sorte qu'une première broche (28) du connecteur à trois broches soit une connexion de terre (36), de préférence une connexion de terre permanente.

5. Dispositif de commande selon l'une des revendications précédentes, **caractérisé en ce que** la première broche (28) du connecteur à trois broches est configurée pour une connexion avec une première borne d'un premier capteur (T₂) et avec une première borne d'un deuxième capteur (T₁) et pour une connexion avec une première borne de l'au moins une charge électrique (16, 24).

6. Dispositif de commande selon l'une des revendications précédentes, **caractérisé en ce qu'**une deuxième broche (30) du connecteur à trois broches est configurée pour une connexion avec une deuxième borne du premier capteur (T₂) et une troisième broche (32) du connecteur à trois broches est configurée pour une connexion avec une deuxième borne du deuxième capteur (T₁).

7. Dispositif de commande selon l'une des revendications précédentes, **caractérisé en ce que** la deuxième broche (30) et/ou la troisième broche (32) du connecteur à trois broches sont configurées pour une connexion avec une deuxième borne de l'au moins une charge électrique (16, 24), dans lequel, de préférence dans l'interface électrique (26), la deuxième broche (30) du connecteur à trois broches est configurée pour une connexion avec une deuxième borne d'une première charge électrique (16) et la troisième broche (32) du connecteur à trois broches est configurée pour une connexion avec une deuxième borne d'une deuxième charge électrique (24).

8. Dispositif de commande selon l'une des revendications précédentes, **caractérisé en ce que** le dispositif de commutation (34) est configuré pour appliquer sélectivement une première tension (V₁) ou une deuxième tension (V₂) entre la première broche (28) et la deuxième broche (30) du connecteur à trois broches, la première tension (V₁) et la deuxième tension (V₂) sont de préférence des tensions CC présentant des polarités opposées et/ou sont de valeurs absolues différentes.

9. Dispositif de commande selon l'une des revendications précédentes, **caractérisé en ce que** le dispositif de commutation (34) est configuré pour appliquer sélectivement une troisième tension (V₃) entre la première broche (28) et la troisième broche (32) du connecteur à trois broches, dans lequel de préférence l'interface électrique (26) et le dispositif de commutation (34) sont configurés de sorte que la troisième tension (V₃) présente une polarité opposée à la polarité de la première tension (V₁) appliquée entre la première broche (26) et la deuxième broche (30).

10. Dispositif de commande selon l'une des revendications précédentes, **caractérisé en ce que** le dispositif de commutation (34) est configuré pour appliquer sélectivement une troisième tension (V₃) ou une quatrième tension entre la première broche (28) et la troisième broche (32) du connecteur à trois broches, la troisième tension (V₃) et la quatrième tension sont de préférence des tensions CC présentant des polarités opposées et/ou sont de valeurs absolues différentes.

11. Dispositif de commande selon l'une des revendications précédentes, **caractérisé en ce que** le dispositif de commutation (34) est configuré de sorte que la première tension (V₁) et la troisième tension (V₃) soient de valeurs absolues identiques et/ou de polarité identique, et de sorte que de préférence la deuxième tension (V₂) et la quatrième tension soient de valeurs absolues identiques et/ou de polarité identique.

12. Dispositif de commande selon l'une des revendications précédentes, **caractérisé en ce que** le dispositif de commutation (34) est configuré pour connecter sélectivement la deuxième broche (30) et/ou la troisième broche (32) à une connexion de terre (36).

13. Dispositif de commande selon l'une des revendications précédentes, **caractérisé en ce que** l'interface électrique (26) est configurée pour connecter une charge électrique (16, 24) qui est un relais, une commande de vanne, un élément chauffant, un dispositif PWM et/ou un dispositif d'alarme.

14. Dispositif de commande selon l'une des revendications précédentes, **caractérisé par** au moins un faisceau (38) configuré pour connecter l'au moins une charge (16, 24) au connecteur à trois broches, le faisceau comprenant au moins une diode (40), de préférence située dans un connecteur connecté à la deuxième broche (30) ou à la troisième broche (32) du connecteur à trois broches.

15. Dispositif de commande selon l'une des revendications précédentes, **caractérisé en ce que** le dispositif de commutation (34) est configuré pour connecter sélectivement au moins la deuxième broche (30) et la troisième broche (32) du connecteur à trois broches à une interface de communication de données (42) du dispositif de commande (12) ou à une interface d'entrée de données (44) du dispositif de commande.

16. Unité de pompe (10) comprenant une pompe présentant un moteur d'entraînement électrique, **caractérisée par** un dispositif de commande (12) selon l'une des revendications précédentes, dans laquelle le dispositif de commande (12) commande de préférence le moteur d'entraînement électrique.

17. Système hydronique **caractérisé par** un dispositif de commande selon l'une des revendications 1 à 15 ou une unité de pompe selon la revendication 16, le système hydronique comprenant un premier capteur (T₂) connecté à la première broche (28) et à la deuxième broche (30) et un deuxième capteur connecté à la première broche (28) et à la troisième broche (32) et au moins une charge électrique (16, 24) connectée à la première broche (28) et à la deuxième broche (30) du connecteur à trois broches, dans laquelle de préférence le premier capteur (T₂) et le deuxième capteur (T₁) sont un capteur de température et/ou un capteur de pression et/ou un capteur de débit, et/ou dans lequel le système hydronique comprend de préférence au moins un dispositif de vanne (18) présentant une commande de vanne électrique (24), de préférence une commande thermoélectrique, qui est l'au moins une charge électrique qui est connectée à l'interface électrique (26) du dispositif de commande (12).
